# EUROPÄISCHE PATENTSCHRIFT

(11) **EP 4 090 638 B1**
(45) Veröffentlichungstag und Bekanntmachung des Hinweises auf die Patenterteilung: **13.11.2024**
(21) Anmeldenummer: 21700855.6
(22) Anmeldetag: 12.01.2021
(51) Int. Cl.: C04B 26/06, C04B 26/16, C04B 28/06

(54) **VERWENDUNG VON REAKTIONSHARZMISCHUNGEN MIT VORDEFINIERTER POLARITÄT ZUR EINSTELLUNG DER ROBUSTHEIT EINER MÖRTELMASSE**
USE OF REACTION RESIN MIXTURES WITH A PREDEFINED POLARITY FOR ADJUSTING THE ROBUSTNESS OF A MORTAR MASS
UTILISATION DE MÉLANGES DE RÉSINE RÉACTIVE À POLARITÉ PRÉDÉFINIE POUR AJUSTER LA ROBUSTESSE D'UNE COMPOSITION DE MORTIER

(30) Priorität: 14.01.2020 EP 20151568
(43) Veröffentlichungstag der Anmeldung: 23.11.2022
(73) Patentinhaber: Hilti Aktiengesellschaft, 9494 Schaan (LI)
(72) Erfinder: KUMRU, Memet-Emin, 86199 Augsburg (DE)
(74) Vertreter: Hilti Aktiengesellschaft Corporate Intellectual Property
(86) Internationale Anmeldenummer: PCT/EP2021/050476
(87) Internationale Veröffentlichungsnummer: WO 2021/144259

(56) Entgegenhaltungen:
- EP-A1- 0 589 831
- EP-A1- 3 299 432
- DE-A1- 102014 103 924
- US-A- 4 874 675

## Beschreibung

Gegenstand der vorliegenden Erfindung ist die Verwendung einer unpolaren Reaktionsharzmischung zur Verbesserung der Haftung einer Mörtelmasse auf Basis von radikalisch polymerisierbaren Verbindungen, insbesondere auf Basis von Urethan(meth)acrylaten, an der Oberfläche von halbgereinigten und/oder feuchten Bohrlöchern in mineralischen Untergründen. Die Verwendung einer unpolaren Reaktionsharzmischung in entsprechenden Mörtelmasse verringerten deren Sensibilität gegenüber Feuchtigkeit und ungenügenden Reinigungsbedingungen, so dass insgesamt Mörtelmassen erhalten werden können, die sich durch eine verbesserte Robustheit gegenüber äußeren Einflüssen auszeichnen. Ein weiterer Gegenstand der vorliegenden Erfindung ist ein Verfahren zur Verbesserung der Haftung einer Mörtelmasse auf Basis von radikalisch polymerisierbaren Verbindungen, an der Oberfläche von halbgereinigten und/oder feuchten Bohrlöchern in mineralischen Untergründen.

Die Verwendung von Reaktionsharzen auf Basis radikalisch polymerisierbarer Verbindungen ist in den unterschiedlichsten Bereichen, unter anderem im Baubereich, seit langem bekannt, beispielsweise aus EP0589831 A, EP3299432 A1 oder DE102014103924 A1.

Im Bereich der Befestigungstechnik hat sich die Verwendung von Reaktionsharzen als organisches Bindemittel, durchgesetzt. Es handelt sich dabei insbesondere um deren Verwendung als Reaktionsharzmörtel in Zweikomponentensystemen für Dübelanwendungen (chemischer Dübel), wobei der Reaktionsharzmörtel (A Komponente), die Reaktionsharze auf Basis radikalisch polymerisierbarer Verbindungen enthält, und der Härter (B Komponente), das Härtungsmittel enthält. Andere, übliche Bestandteile wie anorganische Zuschlagstoffe oder Farbstoffe können in der einen und/oder der anderen Komponente enthalten sein. Durch Vermischen der beiden Komponenten wird dann durch Radikalbildung die Reaktion in Gang gebracht und das organische Bindemittel gehärtet.

Zur Befestigung von Bauteilen, wie Ankergewindestangen, Bewehrungseisen, Gewindehülsen und Schrauben in Bohrlöchern, in mineralischem Untergrund, wie Beton, Naturstein, Putz, werden gerade dann, wenn hohe Lastwerte der Fixierung erreicht werden sollen, chemische Dübel verwendet. Bei der Anwendung werden zunächst die Bohrlöcher zur Aufnahme der zu befestigenden Bauteile mit den entsprechenden Abmessungen in den mineralischen Untergrund gebohrt. Anschließend müssen die Bohrlöcher von dem Bohrstaub befreit werden, wonach die chemische Zweikomponenten-Mörtelmasse nach Vermischen der Harzkomponente mit der Härterkomponente in das Bohrloch eingebracht und dann das zu befestigende Bauteil in das mit der Mörtelmasse angefüllte Bohrloch eingeführt und justiert wird. Nach dem Aushärten durch Reaktion der Harzkomponente mit der Härterkomponente wird ein fester Halt des Bauteils erreicht.

Die Lastwerte der in dieser Weise befestigten Bauteile und damit ihr Tragverhalten hängt von mehreren Einflussgrößen ab, die in der Literatur in zwei Klassen als interne und externe Größen eingeteilt werden. Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Zu den internen Einflussgrößen gehören die chemische Zusammensetzung der Mörtelmasse, ihr Herstellungsprozess und ihre Verpackung, die in der Regel zwei Komponenten umfasst, die in getrennten Behältern, wie Patronen, Glaspatronen, Kartuschen oder Folienbeuteln oder dergleichen enthalten sind oder die mit Hilfe von Injektionssystemen oder Vergusssystemen angewandt werden.

Wie bereits in der DE102010013196 A1 beschrieben liegt eine wesentliche Einflussgröße auf das Tragverhalten der chemischen Mörtelmasse in der Qualität der Bohrlochreinigung und der Feuchtigkeit des mineralischen Untergrunds. In feuchten Bohrlöchern und in nur schlecht von dem Bohrstaub gereinigten Bohrlöchern tritt eine erhebliche Leistungsabnahme eintritt, die sich in verringerten Lastwerten manifestiert. Die Widerstandsfähigkeit gegenüber diesen Einflussgrößen wird insgesamt als Robustheit der Mörtelmasse bezeichnet. Gemäß der DE102010013196 A1 werden der Harzkomponente A zur Verbesserung der Problematik als weiteren Bestandteil mindestens ein Methacryloxyalkyltrialkoxysilan und/oder ein Poly(meth)acryloxyalkylsilsesquioxan zugefügt.

Es besteht jedoch weiterhin Bedarf an einfachen und kostengünstigen Lösungen, die die Robustheit, insbesondere die Leistungsabnahme in feuchten und halbgereinigten Bohrlöchern, von Mörtelmassen auf Basis von radikalisch polymerisierbaren Verbindungen, insbesondere auf Basis von Urethan(meth)acrylaten, verbessern.

Die der vorliegenden Erfindung zugrunde liegenden Aufgabe besteht somit darin, eine einfache und kostengünstige Lösung bereitzustellen, mit der die Robustheit einer Mörtelmasse auf Basis von radikalisch polymerisierbaren Verbindungen, insbesondere auf Basis von Urethan(meth)acrylaten, verbessert werden kann. Es ist insbesondere Aufgabe der vorliegende Erfindung eine Lösung bereitzustellen, mit der die Haftung einer Mörtelmasse an der Oberfläche von halbgereinigten und/oder feuchten Bohrlöchern in mineralischen Untergründen verbessert werden kann, so dass insgesamt die Sensibilität der Mörtelmasse gegen Feuchtigkeit und ungenügenden Reinigung des Bohrlochs vermindert wird.

Es hat sich überraschenderweise gezeigt, dass die Polarität der in der Mörtelmasse enthaltenden Reaktionsharzmischung einen großen Einfluss auf die Robustheit der Mörtelmasse hat. Insbesondere hat sich gezeigt, dass die Verwendung von unpolaren Reaktionsharzmischungen in der Harzkomponente einer Mörtelmasse zu einer verbesserten Haftung der Mörtelmasse an der Oberfläche von halbgereinigten und/oder feuchten Bohrlöchern in mineralischen Untergründen zeigt.

Ohne sich an dieser Stelle auf eine bestimmte Theorie festlegen zu wollen, gehen die Erfinder davon aus, dass die verbesserte Haftung auf eine verminderte Wasseraufnahmefähigkeit der Mörtelmasse zurückzuführen ist. Bei der Applikation von Mörtelmassen in feuchte Bohrlöcher lassen sich oft Aushärtestörungen an der Grenzfläche Mörtelmasse/mineralischer Untergrund beobachten. Diese Aushärtestörungen kommen dadurch zustande, dass an der Grenzfläche Wasser aus dem feuchten Bohrloch in die Mörtelmasse aufgenommen wird. Die Aushärtestörungen sind umso stärker ausgeprägt, je mehr Wasser in der Mörtelmasse vorliegt
Ein Gegenstand der vorliegenden Erfindung ist daher die Verwendung einer unpolaren Reaktionsharzmischung in der Harzkomponente eines Mehrkomponenten-Reaktionsharzsystems zur Verbesserung der Haftung einer Mörtelmasse auf Basis von radikalisch polymerisierbaren Verbindungen an der Oberfläche von halbgereinigten und/oder feuchten Bohrlöchern in mineralischen Untergründen, wobei die Polarität der Reaktionsharzmischung <7 mN/m ist.

Gegenstand der vorliegenden Erfindung ist ferner ein Verfahren zur Verbesserung der Haftung einer Mörtelmasse auf Basis von radikalisch polymerisierbaren Verbindungen an der Oberfläche von halbgereinigten und/oder feuchten Bohrlöchern in mineralischen Untergründen, wobei die Polarität der Reaktionsharzmischung <7 mN/m ist.

Ein weiterer Gegenstand der vorliegenden Erfindung ist auch eine Harzkomponente mit einer Polarität <7 mN/m ein Mehrkomponenten-Reaktionsharzsystems umfassend mindestens eine unpolare Reaktionsharzmischung.

Zum besseren Verständnis der Erfindung werden die folgenden Erläuterungen der hierin verwendeten Terminologie als sinnvoll erachtet. Im Sinne der Erfindung bedeuten:
- "Reaktionsharzmischung" eine Mischung aus mindestens einem Reaktionsharz und mindestens einem Reaktivverdünner;
- "Reaktionsharz auf Basis einer radikalisch polymerisierbaren Verbindung", kurz auch "Reaktionsharz" oder "Basisharz" genannt, eine üblicherweise feste oder hochviskose "radikalisch härtbare", d.h. radikalisch polymerisierbare ungesättigte Verbindung, welche durch Polymerisation härtet und eine Harzmatrix bildet;
- "Reaktivverdünner" flüssige oder niedrigviskose Monomere und Oligomere, die eine oder mehrere zur Reaktion mit dem Reaktionsharz befähigte funktionelle Gruppen enthalten und bei der Polymerisation (Härtung) zum überwiegenden Teil Bestandteil der gehärteten Masse (Harzmatrix) werden;
- "Inhibitor" eine zur Inhibierung der Polymerisationsreaktion (Härtung) fähige Verbindung, die dazu dient, die Polymerisationsreaktion und damit ein unerwünschtes vorzeitiges Polymerisieren des Reaktionsharzes während der Lagerung zu vermeiden (in dieser Funktion oftmals auch als Stabilisator bezeichnet) und/oder den Start der Polymerisationsreaktion unmittelbar nach der Zugabe des Härtungsmittels zu verzögern; welche Aufgabe der Inhibitor hat, hängt davon ab, in welchen Mengen er eingesetzt wird;
- "Härtungsmittel" Stoffe, welche die Polymerisation (das Härten) der radikalisch härtbaren ungesättigten Verbindung, insbesondere des Reaktionsharzes, bewirken bzw. initiieren;
- "Beschleuniger" eine zur Beschleunigung der Polymerisationsreaktion (Härtung) fähige Verbindung, die dazu dient, die Bildung von Radikalen, insbesondere aus dem Härtungsmittel, zu beschleunigen;
- Harzkomponente (A-Komponente) die Mischung aus der Reaktionsharzmischung mit ggf. mindestens einem Beschleuniger und/oder mindestens einem Inhibitor und/oder weiteren Additive;
- "Härterkomponente" eine Mischung aus dem Härtungsmittel und anorganischen und/oder organischen Zuschlagstoffen (Füllstoffe und/oder Additive), wie etwa ein Phlegmatisierungsmittel, d.h. Stabilisierungsmittel für das Härtungsmittel;
- "Füllstoff" eine organische oder anorganische, insbesondere anorganische Verbindung;
- "Mörtelmasse" bezeichnet die Formulierung, die durch Mischen der Reaktionsharzmischung mit der Härterkomponente, der das Härtungsmittel enthält, erhalten wird, und als solches direkt zur chemischen Befestigung verwendet werden kann;
- "zweikomponentiges Reaktionsharzsystem" ein Reaktionsharzsystem, das zwei voneinander getrennt gelagerte Komponenten, im Allgemeinen eine Harzkomponente und eine Härterkomponente, umfasst, so dass eine Härtung des Reaktionsharzes erst nach dem Mischen der beiden Komponenten erfolgt;
- "mehrkomponentiges Reaktionsharzsystem" ein Reaktionsharzsystem, das mehrere voneinander getrennt gelagerte Komponenten umfasst, so dass eine Härtung des Reaktionsharzes erst nach dem Mischen aller Komponenten erfolgt;
- "(Meth)acryl.../...(meth)acryl...", dass sowohl die "Methacryl.../...methacryl..."- als auch die "Acryl.../...acryl..."-Verbindungen umfasst sein sollen; bevorzugt sind in der vorliegenden Erfindung "Methacryl.../...methacryl..." -Verbindungen;
- "ein", "eine", "einer" als Artikel vor einer chemischen Verbindungsklasse, z.B. vor dem Wort "Reaktivverdünner", dass eine oder mehrere unter diese chemische Verbindungsklasse fallende Verbindungen, z.B. verschiedene "Reaktivverdünner", gemeint sein können;
- "mindestens ein", "mindestens eine", "mindestens einer" zahlenmäßig "ein oder mehrere"; in einer bevorzugten Ausführungsform ist mit diesem Begriff zahlenmäßig "ein", "eine", "einer" gemeint;
- "enthalten", "umfassen" und "beinhalten", dass neben den genannten Bestandteilen noch weitere vorhanden sein können; diese Begriffe sind einschließlich gemeint und umfassen daher auch "bestehen aus"; "bestehen aus" ist abschließend gemeint und bedeutet, dass keine weiteren Bestandteile vorhanden sein können; in einer bevorzugten Ausführungsform bedeuten die Begriffe "enthalten", "umfassen" und "beinhalten" den Begriff "bestehen aus";

Alle in diesem Text genannten Normen (z.B. DIN-Normen) wurden in der zum Anmeldetag dieser Anmeldung aktuellen Ausgabe verwendet.

Es hat sich gezeigt, dass die Polarität der Reaktionsharzmischung einen signifikanten Einfluss auf die Robustheit der Mörtelmasse hat. Die Verwendung von unpolaren Reaktionsharzmischungen in der Harzkomponente eines Mehrkomponenten-Reaktionsharzsystems führt zu einer signifikanten Verbesserung der Haftung einer Mörtelmasse auf Basis von radikalisch polymerisierbaren Verbindungen, insbesondere auf Basis von Urethan(meth)acrylaten, an der Oberfläche von halbgereinigten und/oder feuchten Bohrlöchern in mineralischen Untergründen.

Die Reaktionsharzmischung stellt einen wesentlichen Teil der Harzkomponente (A-Komponente) dar und wird durch Mischen mindestens eines Reaktionsharzes mit einem oder mehreren Reaktivverdünnern erhalten. Über die Auswahl und die Menge des/der Reaktivverdünner in Kombination mit der Auswahl des Reaktionsharzes kann die Polarität der resultierenden Reaktionsharzmischung gesteuert.

Geeignete radikalisch polymerisierbare Verbindungen als Reaktionsharz sind ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Besonders bevorzugt ist die radikalisch polymerisierbare Verbindung, das Reaktionsharz, eine Verbindung auf Urethan(meth)acrylatbasis, Epoxy(meth)acrylatbasis, ein (Meth)acrylat eines alkoxylierten Bisphenols oder eine Verbindung auf Basis weiterer ethylenisch ungesättigter Verbindungen.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Ganz besonders bevorzugt sind Vinylesterurethanharze, insbesondere Urethanmethacrylate.

Beispiele geeigneter ungesättiger Polyester werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in der DE 102011017 626 B4 beschriebenen Urethanmethacrylatharze (die auch als Vinylesterurethanharze bezeichnet werden).

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist.

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, und Neopentylglykol-mono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen. Acrylsäure ist wegen ihrer geringeren Alkalistabilität weniger bevorzugt als am Kohlenwasserstoffrest substituierte Acrylsäuren.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Reaktionsharze, die erfindungsgemäß als radikalisch polymerisierbare Verbindungen verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Reaktionsharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Zur Herstellung der unpolaren Reaktionsharzmischung wird das Reaktionsharz mit mindestens einer weiteren niederviskosen, radikalisch polymerisierbaren, ethylenisch ungesättigte Verbindung als Reaktivverdünner vermischt. Es möglich, dass es bereits ausreichend ist lediglich einen Reaktivverdünner zu verwenden, der dann in Kombination mit dem Reaktionsharz die unpolare Reaktionsharzmischung ergibt. Üblicherweise kommt jedoch eine Mischung aus mindesstens zwei Reaktivverdünnern zum Einsatz. Die Auswahl des Reaktivverdünners bzw. einer Mischung von zwei oder mehr Reaktivverdünnern erfolgt in Abhängigkeit von der Polarität des Reaktionsharzes, so dass durch Abstimmung eines oder mehrerer Reaktivverdünner auf das Reaktionsharz eine unpolare Reaktionsharzmischung eingestellt werden kann. In erster Linie bestimmen die gewünschten Eigenschaften des chemischen Dübels, welcher aus der Mörtelmasse umfassend die Reaktionsharzmischung, hergestellt wird die intiale Auswahl des Reaktionsharzes. Die beansprauchte Erfindung ermöglicht es damit auch bei einer limitierten Variabilität des Reaktionsharzes die Robustheit der Mörtelmasse ingesamt zu verbessern.

Der Ausdruck einer unpolaren Reaktionsharzmischung bedeutet im Rahmen der vorliegenden Erfindung eine Reaktionsharzmischung, bei der der polare Anteil der Oberflächenspannung der Reaktionsharzmischung < 7mN/m ist, insbesondere 0 mN/m bis 7 mN/m. Ein Reaktivverdünner oder die Mischung verschiedener Reaktivverdünner wird als unpolar bezeichnet, wenn der polare Anteil der Oberflächenspannung der Reaktionsharzmischung < 7mN/m ist, insbesondere 0 mN/m bis 7 mN/m.

Die Oberflächenspannung einer Verbindung oder einer Mischung von Verbindungen setzt sich zusammen aus einem dispersivem und einem polaren Anteil. Als Maß für die Polarität der Reaktionsharzmischung und auch für die Klassifikation der Reaktivverdünner gilt im Rahmen der vorliegenden Erfindung der polare Anteil der Oberflächenspannung, welcher mit Hilfe einer Kontaktwinkelmessung (Tropfenkonturanalyse-system G10/DSA10 von Fa. KRÜSS) an einer unpolaren Referenzoberfläche (Teflon) bestimmt wird. Die Kontaktwinkelmessung wird üblicherweise bei 25 °C durchgeführt. Bei der Messung müssen die folgenden Kriterien erfüllt sein: a) Die Oberflächenspannung des Festkörpers ist bekannt und völlig unpolar (Teflon (20mN/m und polare Anteil= 0)); b) Die Gesamt-Oberflächenspannung der Reaktionsharzmischung ist bekannt. Diese wird mittels Pendant-Drop-Method (Tropfenkonturanalyse-system G10/DSA10 von Fa. KRÜSS) bestimmt; c) Es erfolgt die Bestimmung des fortschreitenden Kontaktwinkels zwischen dem Reaktionsharzmischung und der Referenzoberfläche (Tropfenkonturanalyse-system G10/DSA10 von Fa. KRÜSS).

Die Wahl des Reaktivverdünners bzw. die Wahl der Mischung von zwei oder mehr Reaktivverdünnern wird von einem Fachmann in Abhängigkeit vom Reaktionsharz und den gewünschten Eigenschaften der Mörtelmasse bzw. dem aus der Mörtelmasse resultierendem chemischen Dübel getroffen.

Prinzipiell können als Reaktiververdünner zur Herstellung der Reaktionsharzmischung alle niederviskosen, radikalisch polymerisierbaren, ethylenisch ungesättigten Verbindungen eingesetzt werden, insbesondere solche, die in den Anmeldungen EP 1935860 A1 und DE 19531649 A1 beschrieben sind. Bei der Auswahl des Reaktivverdünners ist lediglich zu beachten, dass aus der Kombination des Reaktionsharzes mit dem/den Reaktivverdünern eine unpolare Reaktionsharzmischung entsteht. Unter gegebenen Umstände kann es dabei auch möglich sein, dass eine Mischung aus einem polare und einem unpolaren Reaktivverdünner zum Einsatz kommt, um eine optimale Einstellung der unpolaren Reaktionsharzmischung zu erreichen.

Vorzugsweise enthält die Reaktionsharzmischung als Reaktivverdünner einen (Meth)acrylsäureester, wobei besonders bevorzugt (Meth)acrylsäureester ausgewählt werden aus der Gruppe bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Butandiol-1,3-di(meth)acrylat, Hexandiol-1,6-di(meth)acrylat, Acetoacetoxyethyl(meth)acrylat, Ethandiol-1,2-di(meth)acrylat, Isobornyl(meth)acrylat, Di-, Tri- oder Oligo-ethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder T ricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, Isobornyl(meth)acrylat und Decalyl-2-(meth)acrylat. Biogene Reaktivverdünner wie Tetrahydrofurfuryl(meth)acrylat, Isobornyl(meth)acrylat oder Isosorbiddi(meth)acrylat sind bevorzugt.

Zur Herstellung der unpolaren Reaktionsharzmischung oder zur Erniedrigung der Polarität einer Reaktionsharzmischung werden bevorzugt Reaktivverdünner verwendet, die kein oder ein geringes permanentes Dipolemoment aufweisen. Bevorzugt weisen entsprechende Reaktivverdünner eine lange Alkylkette ohne funktionelle Gruppen auf. Bevorzugt ist die lange Alkylkette ein verzweigter, unverzweigter oder zyklischer Alkylrest mit 3 bis 20 Kohlenstoffatomen.

Bevorzugt werden die Reaktivverdünner zur Herstellung einer unpolaren Reaktionsharzmischung ausgewählt aus der Gruppe bestehend aus Ethylmethacrylat (EMA), 3,3,5-Trimethylcyclohexyl methacrylate (TMCHMA), Isobornyl Methacrylate (IBOMA), Isobutyl methacrylat (i-BMA), Tetrahydrofurfuryl methacrylat (THFMA), 2-Ethylhexylmethacrylat (2-HEMA), Cyclohexylmethacrylat (c-HMA), Allylmethacrylat (AMA), Benzylmethacrylat (BNMA), Isodecylmethacrylat (IDMA), 1,12-Dodecandioldimethacrylat (1,12-DDDDMA), 1,6-Hexandiol-dimethacrylat (1,6-HDDMA), 1,4-Butandioldimethacrylat (1,4-BDDMA), 1,3- Butandioldimethacrylat (1,3-BDDMA), Ethylengylcoldimethacrylat (EGDMA) und Glyceroldimethacrlyat.

Die Reaktivverdünner können sowohl einzeln als auch in Mischung von zwei oder mehr Reaktivverdünnern verwendet werden. Zur optimalen Einstellung der Eigenschaften der unpolaren Reaktionsharzmischung, der Mörtelmasse und des chemischen Dübels ist es bevorzugt, dass eine Mischung von polaren und unpolaren Reaktivverdünnern zum Einsatz kommt.

Der Reaktivverdünner kann in einer Menge von 90 bis 10 Gew.-%, bevorzugt 80 bis 20 Gew.-%, besonders bevorzugt 70 bis 30 Gew.-%, bezogen auf die Harzkomponente (A), in der Reaktionsharzmischung enthalten sein.

Zweckmäßig enthält die Harzkomponente des Weiteren mindestens einen Beschleuniger. Hierdurch wird die Härtungsreaktion der Reaktionsharzmischung mit dem Härtungsmittel beschleunigt. Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl(2-chloroethyl)amin, 2-Ethylhexylamin, Bis(2-chloroethyl)amin, 2-Ethylhexylamin, Bis(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis(2-hydroxyethyl)oleylamin, Tris-[2-(2-hydroxy-ethoxy)-ethyl]amin, 3-Amino-1-propanol, Methyl(3-aminopropyl)ether, Ethyl-(3-aminopropyl)ether, 1,4-Butandiol-bis(3-aminopropyl)ether, 3-Dimethylamino-1-propanol, 1-Amino-2-propanol, 1-Diethylamino-2-propanol, Diisopropanolamin, Methyl-bis(2-hydroxypropyl)amin, Tris(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind symmetrisch oder asymmetrisch substituierten Anilin- und Toluidin-Derivate und N,N-Bis(hydroxy)alkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine und 4,4'-Bis(dimethylamino)diphenylmethan und/oder die Leucoformen der Farbstoffe Kristallviolett oder Malachitgrün.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Der Beschleuniger kann in einer Menge von 0,01 bis 10 Gew.-%, bevorzugt 0,5 bis 5 Gew.-%, besonders bevorzugt 0,5 bis 3 Gew.-%, bezogen auf die Harzkomponente, in den Reaktionsharzsystem enthalten sein.

In einer weiteren Ausführungsform enthält die Harzkomponente des Weiteren einen Inhibitor für die Lagerstabilität der Harzkomponente. Der Inhibitor kann allein oder zusammen mit dem Beschleuniger in der Harzkomponente enthalten sein.

Als Inhibitoren sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und N-oxyl-Radikale in Betracht.

Als N-Oxyl-Radikale können beispielsweise solche verwendet werden, wie sie in der DE 199 56 509 beschrieben sind. Geeignete stabile N-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-Oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Diese Verbindungen sind besonders deshalb sinnvoll und meist erforderlich, da sonst die anzustrebende Lagerstabilität von vorzugsweise mehr als 3 Monaten, insbesondere 6 Monaten oder mehr, nicht erreicht werden kann. Die UV- und insbesondere die Lagerstabilität können so beträchtlich erhöht werden.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Bevorzugte Inhibitoren sind 1-Oxyl-2,2,6,6-tetramethylpiperidin (TEMPO) und 1-Oxyl-2,2,6,6-tetramethylpiperidin-4-ol (TEMPOL), Katechole, besonders bevorzugt tert-ButylBrenzkatechin und Brenzkatechin, BHT und Phenothiazin.

Die Inhibitoren können, abhängig von den gewünschten Eigenschaften des Reaktionsharzsystems, entweder allein oder als Kombination von zweien oder mehreren davon verwendet werden.

Der Inhibitor kann in einer Menge von 0,001 bis 5 Gew.-%, bevorzugt 0,01 bis 3 Gew.- %, besonders bevorzugt 0,05 bis 1 Gew.-%, bezogen auf die Harzkomponente, in dem Reaktionsharzsystem enthalten sein. Sind mehrere Inhibitoren enthalten, so entspricht die eben genannte Menge der Gesamtmenge an Inhibitoren.

Gemäß einer Ausführungsform enthält die Harzkomponente anorganische Zusatzstoffe, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerde- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Teilchen haben vorzugsweise einen maximalen Durchmesser von 10 mm. Bevorzugt und deutlicher verstärkend wirken sich jedoch die globulären, inerten Stoffe (Kugelform) aus.

Füllstoffe liegen in der Harzkomponente vorzugsweise in einer Menge von 20 bis zu 90, insbesondere 40 bis 80, vor allem 50 bis 80 Gew.-% vorhanden.

Weitere denkbare Zusätze sind ferner Rheologieadditive, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Ferner können Mittel zur Regulierung des pH-Wertes, wie anorganische und/oder organische Säuren gemäß DE102010008971A1, insbesondere Copolymere mit sauren Gruppen, z.B. Estern der Phosphorsäure, eingesetzt werden. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z.B. Aceton, Diniederalkylniederalkanoylamide, wie Dimethylacetamid, Niederalkylbenzole, wie Xylole oder Toluol, Phthalsäureester oder Paraffine, oder Wasser. Darüber hinaus können auch Mittel zur Verbesserung der Verträglichkeit zwischen Harz- und Härterkomponente, wie ionische, nichtionische oder amphotere Tenside; Seifen, Netzmittel, Detergenzien; Polyalkylenglykolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglykolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglykolether, Alkylphenolcarboxylate; quartäre Ammoniumverbindungen, Esterquats, Carboxylate quartärer Ammoniumverbindungen, verwendet werden.

Zweckmäßig wird die Härtung der Harzkomponente mit einem Peroxid als Härtungsmittel initiiert. Neben dem Peroxid kann zusätzlich ein Beschleuniger verwendet werden. Alle dem Fachmann bekannten Peroxide, die zum Härten von Methacrylatharzen verwendet werden, können eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) oder tert-Butylperoxybenzoat verwendet.

Als anorganische Peroxide können insbesondere Persulfate, Perborate und/oder Perphosphate, wie Ammoniumpersulfat, Kalium- und Natriummonopersulfate oder Kalium- und Natriumdipersulfate, verwendet werden. Aber auch Wasserstoffperoxid kann verwendet werden.

Auch die Verwendung von organisch substituierten Ammoniumpersulfaten (beispielsweise N'N'N'N'-Tetrabutylammonium- oder N'N'N'-Tricapryl-N'-methylammoniumpersulfat ist möglich.

Neben dem Peroxid enthält erfindungsgemäß die Härterkomponente noch ein Phlegmatisierungsmittel um das Peroxid zu stabilisieren. Entsprechende Phlegmatisierungsmittel sind aus der DE 3226602 A1, EP 0432087 A1 und EP 1 371 671 A1 bekannt.

Die Härterkomponente enthält bevorzugt Wasser als Phlegmatisierungsmittel. Neben dem Wasser kann die Härterkomponente noch weitere Phlegmatisierungsmittel enthalten, wobei Wasser als alleiniges Phlegmatisierungsmittel bevorzugt ist, um keine Verbindungen einzubringen, die eine weichmachende Wirkung haben.

Das Peroxid kann in einer Menge von 0,25 bis 35 Gew.-%, bevorzugt 1 bis 30 Gew.-%, besonders bevorzugt 5 bis 25 Gew.-%, bezogen auf die Härterzusammensetzung, in den Reaktionsharzsystem enthalten sein.

Bevorzugt enthält die Härter-Komponente ferner anorganische Zusatzstoffe, wie Füllstoffe und/oder weitere Zusätze, wie sie der Harz-Komponente zugegeben werden können.

Bevorzugt kommt die erfindungsgemäße Verwendung einer unpolaren Reaktionsharzmischung bei Mehrkomponenten-Reaktionsharzsystemen, insbesondere Zweikomponenten-Reaktionsharzsystemen, zum Einsatz, in denen die Harzkomponente und die Härterkomponente reaktionsinhibierend getrennt in unterschiedlichen Behältern vorliegen, beispielsweise einer Mehrkammer-Vorrichtung, wie eine Mehrkammer-Patrone und/oder -Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin, dass das Zweikomponenten-Reaktionsharzsystem als Zweikomponenten-Kapseln zu konfektionieren, die in das Bohrloch eingeführt werden und durch schlagdrehendes Setzen des Befestigungselements zerstört werden unter gleichzeitiger Durchmischung der beiden Komponenten der Mörtelmasse. Vorzugsweise wendet man ein Patronensystem oder ein Injektionssystem an, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Das Zweikomponenten-Reaktionsharzsystem findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Gegenstand der vorliegenden Erfindung ist ferner ein Verfahren zur Verbesserung der Haftung einer Mörtelmasse auf Basis von radikalisch polymerisierbaren Verbindungen an der Oberfläche von halbgereinigten und/oder feuchten Bohrlöchern in mineralischen Untergründen. Das erfindungsgemäße Verfahren umfasst dabei die folgenden Schritte: i) Bereitstellen eines Reaktionsharzes, ii) Mischen des Reaktionsharzes mit einem oder mehreren Reaktivverdünnern zur Herstellung eines unpolaren Reaktionsharzmischung und iii) Verwendung der so hergestellten unpolaren Reaktionsharzmischung in einer Harzkomponente eines Mehrkomponenten-Reaktionsharzsystems. Hinsichtlich des Reaktionsharzes, der Reaktivverdünner und der Reaktionsharzmischung gelten die vorstehenden Ausführungen.

Ein weiterer Gegenstand der vorliegenden Erfindung ist auch eine Harzkomponente auf Basis von radikalisch polymerisierbaren Verbindungen für ein Mehrkomponenten-Reaktionsharzsystems, insbesondere eines Zweikomponenten-Reaktionsharzsystems, umfassend eine unpolare Reaktionsharzmischung enthaltend mindestens ein Reaktionsharz und ein oder mehrere Reaktivverdünner für die chemische Befestigung von Konstruktionselementen.

Die folgenden Beispiele dienen der weiteren Erläuterung der Erfindung.

### AUSFÜHRUNGSBEISPIELE

Die Harzkomponenten Unpolar 1 bis 5 (erfindungsgemäß) und Polar 1 bis 4 (nicht erfindungsgemäß) wurden durch Vermischen der in den Tabellen 1 und 2 genannten Bestandteilen hergestellt.

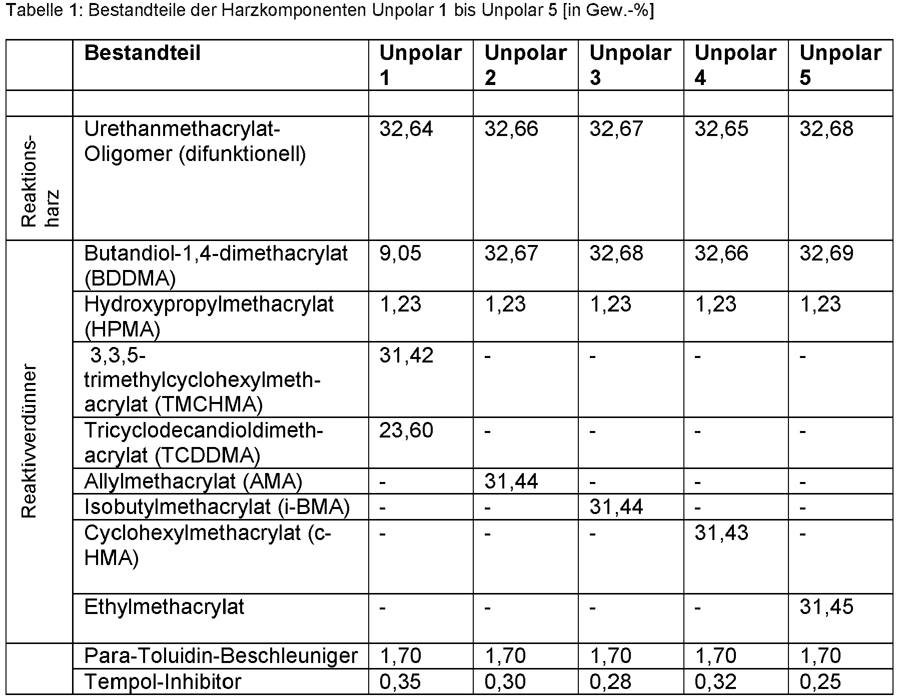

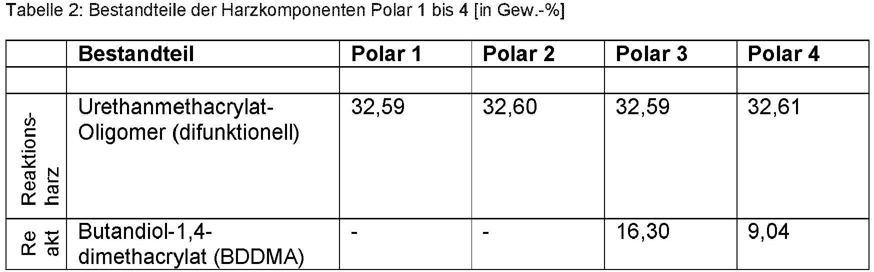

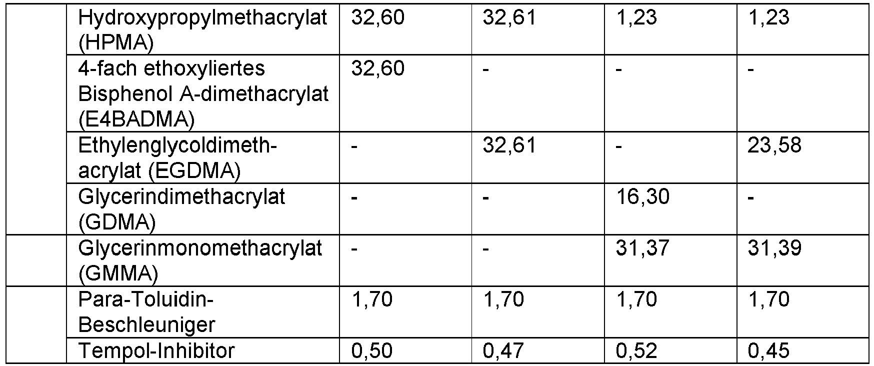

### Bestimmung der Harz-Polarität

Als Maß für die Polarität des jeweiligen Reaktionsharzmischung wurde der polare Anteil der Oberflächenspannung genommen, welcher mit Hilfe einer Kontaktwinkelmessung (Tropfenkonturanalyse-system G10/DSA10 von Fa. KRÜSS) an einer unpolaren Referenzoberfläche (Teflon) bestimmt wurde. Die Ergebnisse der Polaritätsmessung sind in Tabelle 3 dargestellt.

### Herstellung von Zwei-Komponenten Reaktionsharzsystemen

Die Herstellung von Zwei-Komponenten Reaktionsharzsystemen unter Verwendung der in Tabelle 1 und 2 aufgeführten Reaktionsharzmischungen erfolgte nach der folgenden Vorschrift: 39,3 g der Harzkomponente, 37,2 g Quarzsand F32 (Quarzwerke) und 18,51 g Secar80 (Aluminatzement), 0,4 g Borsäure (SCL Italia) und 3 g hydrophobe Kieselsäure (Cabot GmbH) wurden im Dissolver unter Einsatz von Vakkuum zu einer luftblasenfreien pastösen Masse homogenisiert.

Als Härterkomponente B wurde die Härterkomponente des kommerziell erhältlichen Produktes HY150 Max der Firma Hilti verwendet. Die Harzkomponenten A wurden jeweils in einem Volumenverhältnis von A:B = 3:1 verwendet. Die Massen wurden über einen Statikmischer mit Hilfe des Dispenser BD 2000 der Firma Hilti miteinander vermischt und in ein Bohrloch appliziert.

### Bestimmung der Lastwerte

Zur Bestimmung der Lastwerte der ausgehärteten Massen verwendet man eine Ankergewindestange M12, die in ein Bohrloch in Beton mit einem Durchmesser von 14 mm und einer Bohrlochtiefe von 110 mm mit dem erfindungsgemässen Zweikomponenten-Reaktionsharz eingedübelt wird. Man ermittelt die mittlere Versagenslast durch zentrisches Ausziehen der Ankergewindestange mit enger Abstützung unter Verwendung hochfester Ankergewindestangen. Es werden jeweils 5 Ankergewindestangen eingedübelt und nach 24 Stunden Aushärtung bei Raumtemperatur (25 °C) ihre Lastwerte bestimmt. Die Lastwerte wurde zum einen unter Referenzbedingungen (trockenes, gereinigtes Bohrloch (Ausblasen mit Druckluft, Bürsten mit Drahtbürste (3x), Ausblasen mit Druckluft)) und zum anderen in einem feuchten und halbgereinigten Bohrloch (F1b) (Ausblasen mit Druckluft, Bürsten mit Drahtbürste (1x), Ausblasen mit Druckluft)) bestimmt. Die hierbei ermittelten Lastwerte sind als Mittelwert in der nachfolgenden Tabelle 3 ebenfalls aufgeführt.

**Tabelle 3: Ergebniss der Messung der Polarität der Reaktionsharzmischung sowie Bestimmung der Lastwerte unter Referenzbedingungen und unter F1b-Bedingungen**

| Harzkomponente mit Reaktionsharzmischung | **Polarität [mN/m]** | **Schrumpf [%]** | **Verbundspannung [N/mm²]** | | **Differenz [%]** |
|---|---|---|---|---|---|
| | | | **Referenz** | **F1b** | |
| Unpolar 1 | 0,4 | 1,3 | 17,5±1,0 | 16,4±0,8 | -6,1 |
| Unpolar 2 | 4,8 | 3,6 | 10,7±0,4 | 12,6±0,4 | 17,8 |
| Unpolar 3 | 6,0 | 3,3 | 13,9±0,6 | 13,2±0,7 | -4,9 |
| Unpolar 4 | 6,7 | 2,9 | 16,3±0,5 | 14,9±0,6 | -8,7 |
| Unpolar 5 | 6,9 | 3,1 | 12,4±0,8 | 11,6±0,9 | -6,2 |
| | | | | | |
| Polar 1 | 8,7 | 1,9 | 19,9±0,8 | 17,5±0,7 | -12,2 |
| Polar 2 | 9,8 | 1,5 | 18,9±0,3 | 13,3±0,7 | -29,5 |
| Polar 3 | 10,1 | 2,0 | 18,2±0,4 | 14,7±0,5 | -19,6 |
| Polar 4 | 13,3 | 2,4 | 16,9±0,7 | 13,7±0,6 | -19,2 |

Die Ergebnisse der Tabelle 3 zeigen den Einfluss der Polarität der Reaktionsharzmischung auf die Robustheit eines Zwei-Komponenten Reaktionsharzsystems. Die Verwendung einer unpolaren Reaktionsharzmischung in entsprechenden Mörtelmasse verringerten deren Sensibilität gegen Feuchtigkeit und ungenügenden Reinigungsbedingungen, so dass insgesamt Mörtelmassen erhalten werden, die sich durch eine verbesserte Robustheit gegenüber äußeren Einflüssen auszeichnet.

## Patentansprüche

1. Verwendung einer unpolaren Reaktionsharzmischung enthaltend ein Reaktionsharz und ein oder mehrere Reaktivverdünner zur Verbesserung der Haftung einer Mörtelmasse auf Basis von radikalisch polymerisierbaren Verbindungen an der Oberfläche von halbgereinigten und/oder feuchten Bohrlöchern in mineralischen Untergründen; wobei die unpolaren Reaktionsharzmischung eine Polarität < 7mN/m aufweist; und wobei die Polarität gemäß der Beschreibung gemessen wird.

2. Verwendung gemäß Anspruch 1, wobei die Mörtelmasse auf Basis von radikalisch polymerisierbaren Verbindungen ein Mehrkomponenten-Reaktionsharzsystem, insbesondere ein Zweikomponenten-Reaktionsharzsystem, ist.

3. Verwendung gemäß einem der vorhergehenden Ansprüche, wobei das Reaktionsharz mindestens eine Verbindung aus der Gruppe bestehend aus Verbindungen auf Urethan(meth)acrylatbasis, Epoxy(meth)acrylatbasis, ein (Meth)acrylat eines alkoxylierten Bisphenols oder eine Verbindung auf Basis weiterer ethylenisch ungesättigter Verbindungen umfasst.

4. Verwendung gemäß einem der vorhergehenden Ansprüche, wobei der mindestens eine Reaktivverdünner ausgewählt ist aus der Gruppe bestehend aus Ethylmethacrylat (EMA), 3,3,5-Trimethylcyclohexyl methacrylate (TMCHMA), Isobornyl Methacrylate (IBOMA), Isobutyl methacrylat (i-BMA), Tetrahydrofurfuryl methacrylat (THFMA), 2-Ethylhexylmethacrylat (2-HEMA), Cyclohexylmethacrylat (c-HMA), Allylmethacrylat (AMA), Benzylmethacrylat (BNMA), Isodecylmethacrylat (IDMA), 1,12-Dodecandioldimethacrylat (1,12-DDDDMA), 1,6-Hexandiol-dimethacrylat (1,6-HDDMA), 1,4-Butandioldimethacrylat (1,4-BDDMA), 1,3- Butandioldimethacrylat (1,3-BDDMA), Ethylengylcoldimethacrylat (EGDMA) und Glyceroldimethacrlyat.

5. Harzkomponente auf Basis von radikalisch polymerisierbaren Verbindungen für ein Mehrkomponenten-Reaktionsharzsystems, umfassend mindestens eine unpolare Reaktionsharzmischung enthaltend mindestens eine Reaktionsharz und ein oder mehrere Reaktivverdünner für die chemische Befestigung von Konstruktionselementen, wobei die unpolaren Reaktionsharzmischung eine Polarität < 7mN/m aufweist; und wobei die Polarität gemäß der Beschreibung gemessen wird.

6. Mehrkomponenten-Reaktionsharzsystem umfassend eine Harzkomponente gemäß Anspruch 5 und reaktionsinhibierend getrennt angeordnet eine Härterkomponente.

7. Patrone, Kartusche oder Folienbeutel, enthaltend ein Mehrkomponenten-Reaktionsharzsystems nach Anspruch 6, die zwei oder mehrere voneinander getrennte Kammern umfassen, in welchen die Harzkomponente bzw. der Härterkomponente angeordnet sind.

8. Verfahren zur Verbesserung der Haftung einer Mörtelmasse auf Basis von radikalisch polymerisierbaren Verbindungen, an der Oberfläche von halbgereinigten und/oder feuchten Bohrlöchern in mineralischen Untergründen umfassend
i) Bereitstellen eines Reaktionsharzes,
ii) Mischen des Reaktionsharzes mit einem oder mehreren Reaktivverdünnern zur Herstellung eines unpolaren Reaktionsharzmischung und
iii) Verwendung der so hergestellten unpolaren Reaktionsharzmischung in einer Harzkomponente eines Mehrkomponenten-Reaktionsharzsystems,
wobei die unpolaren Reaktionsharzmischung eine Polarität < 7mN/m aufweist; und wobei die Polarität gemäß der Beschreibung gemessen wird.

## Claims

1. Use of a non-polar reaction resin mixture containing a reaction resin and one or more reactive diluents for improving the adhesion of a mortar composition based on radically polymerizable compounds on the surface of semi-cleaned and/or damp boreholes in mineral substrates; wherein the non-polar reaction resin mixture has a polarity < 7 mN/m; and wherein the polarity is measured according to the description.

2. Use according to claim 1, wherein the mortar composition based on radically polymerizable compounds is a multi-component reaction resin system, in particular a two-component reaction resin system.

3. Use according to any of the preceding claims, wherein the reaction resin comprises at least one compound from the group consisting of compounds based on urethane (meth)acrylate, epoxy (meth)acrylate, a (meth)acrylate of an alkoxylated bisphenol or a compound based on further ethylenically unsaturated compounds.

4. Use according to any of the preceding claims, wherein the at least one reactive diluent is selected from the group consisting of ethyl methacrylate (EMA), 3,3,5-trimethylcyclohexyl methacrylate (TMCHMA), isobornyl methacrylate (IBOMA), isobutyl methacrylate (i-BMA), tetrahydrofurfuryl methacrylate (THFMA), 2-ethylhexyl methacrylate (2-HEMA), cyclohexyl methacrylate (c-HMA), allyl methacrylate (AMA), benzyl methacrylate (BNMA), isodecyl methacrylate (IDMA), 1,12-dodecanediol dimethacrylate (1,12-DDDDMA), 1,6-hexanediol dimethacrylate (1,6-HDDMA), 1,4-butanediol dimethacrylate (1,4-BDDMA), 1,3-butanediol dimethacrylate (1,3-BDDMA), ethylene glycol dimethacrylate (EGDMA) and glycerol dimethacrylate.

5. Resin component based on radically polymerizable compounds for a multi-component reaction resin system, comprising at least one non-polar reaction resin mixture containing at least one reaction resin and one or more reactive diluents for chemically fastening construction elements, wherein the non-polar reaction resin mixture has a polarity < 7 mN/m; and wherein the polarity is measured according to the description.

6. Multi-component reaction resin system comprising a resin component according to claim 5 and a hardener component arranged separately to inhibit the reaction.

7. Cartridge or film pouch containing a multi-component reaction resin system according to claim 6, which comprises two or more separate chambers in which the resin component and the hardener component are arranged.

8. Method for improving the adhesion of a mortar composition based on radically polymerizable compounds on the surface of semi-cleaned and/or damp boreholes in mineral substrates, comprising
i) providing a reaction resin,
ii) mixing the reaction resin with one or more reactive diluents to produce a non-polar reaction resin mixture and
iii) using the non-polar reaction resin mixture thus produced in a resin component of a multi-component reaction resin system,
wherein the non-polar reaction resin mixture has a polarity < 7 mN/m; and wherein the polarity is measured according to the description.

## Revendications

1. Utilisation d'un mélange de résine de réaction non polaire contenant une résine de réaction et un ou plusieurs diluants réactifs pour l'amélioration de l'adhérence d'une masse de mortier à base de composés polymérisables par voie radicalaire à la surface de trous de perçage semi-nettoyés et/ou humides dans des supports minéraux ; dans laquelle le mélange de résine de réaction non polaire présente une polarité < 7 mN/m ; et dans laquelle la polarité est mesurée selon la description.

2. Utilisation selon la revendication 1, dans laquelle la masse de mortier à base de composés polymérisables par voie radicalaire est un système de résine de réaction à plusieurs composants, en particulier un système de résine de réaction à deux composants.

3. Utilisation selon l'une des revendications précédentes, dans laquelle la résine de réaction comprend au moins un composé choisi dans le groupe constitué de composés à base de (méth)acrylate d'uréthane, à base de (méth)acrylate d'époxy, (méth)acrylate d'un bisphénol alcoxylé ou composé à base d'autres composés à insaturation éthylénique.

4. Utilisation selon l'une des revendications précédentes, dans laquelle l'au moins un diluant réactif est choisi dans le groupe constitué de méthacrylate d'éthyle (EMA), méthacrylate de 3,3,5-triméthylcyclohexyle (TMCHMA), méthacrylate d'isobornyle (IBOMA), méthacrylate d'isobutyle (i-BMA), méthacrylate de tétrahydrofurfuryle (THFMA), méthacrylate de 2-éthylhexyle (2-HEMA), méthacrylate de cyclohexyle (c-HMA), méthacrylate d'allyle (AMA), méthacrylate de benzyle (BNMA), méthacrylate d'isodécyle (IDMA), diméthacrylate de 1,12-dodécanediol (1,12-DDDDMA), diméthacrylate de 1,6-hexanediol (1,6-HDDMA), diméthacrylate de 1,4-butanediol (1,4-BDDMA), diméthacrylate de 1,3-butanediol (1,3-BDDMA), diméthacrylate d'éthylèneglycol (EGDMA) et diméthacrylate de glycérol.

5. Composant résineux à base de composés polymérisables par voie radicalaire pour un système de résine de réaction à plusieurs composants, comprenant au moins un mélange de résine de réaction non polaire contenant au moins une résine de réaction et un ou plusieurs diluants réactifs pour la fixation chimique d'éléments de construction, dans lequel le mélange de résine de réaction non polaire présente une polarité < 7 mN/m ; et dans lequel la polarité est mesurée selon la description.

6. Système de résine de réaction à plusieurs composants comprenant un composant résineux selon la revendication 5 et un composant durcisseur disposé séparément de manière à inhiber la réaction.

7. Cartouche ou poche en film, contenant un système de résine de réaction à plusieurs composants selon la revendication 6, laquelle comprend deux chambres ou plus séparées les unes des autres dans lesquelles est disposé le composant résineux ou le composant durcisseur.

8. Procédé pour l'amélioration de l'adhérence d'une masse de mortier à base de composés polymérisables par voie radicalaire à la surface de trous de perçage semi-nettoyés et/ou humides dans des supports minéraux, comprenant
i) la mise à disposition d'une résine de réaction,
ii) le mélange de la résine de réaction avec un ou plusieurs diluants réactifs pour la préparation d'un mélange de résine de réaction non polaire et
iii) l'utilisation du mélange de résine de réaction non polaires ainsi préparé dans un composant résineux d'un système de résine de réaction à plusieurs composants,
dans lequel le mélange de résine de réaction non polaire présente une polarité < 7 mN/m ; et dans lequel la polarité est mesurée selon la description.
